# FASCICULE DE BREVET EUROPEEN

(11) **EP 2 034 539 B1**
(45) Date de publication et mention de la délivrance du brevet: **15.02.2012**
(21) Numéro de dépôt: 08358010.0
(22) Date de dépôt: 02.09.2008
(51) Int. Cl.: H01M 2/10, H01M 2/20, H01M 2/32, H01M 10/50

(54) **Batterie constituée d'une pluralité de cellules positionnées et reliées entre elles, sans soudure**
Batterie, die aus mehreren nebeneinander positionierten und miteinander (ohne Schweißung) verbundenen Zellen besteht
Battery made up of a plurality of cells positioned and connected to one another without welding

(30) Priorité: 06.09.2007 FR 0706239
(43) Date de publication de la demande: 11.03.2009
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 1 450 422
- DE-A1- 4 110 984
- DE-C- 515 051
- FR-A- 2 578 103
- GB-A- 359 441
- JP-A- 1 232 657
- US-A- 5 169 733
- US-B1- 6 340 877

## Description

La présente invention concerne une batterie constituée d'une pluralité de cellules cylindriques ou prismatiques positionnées et reliées entre elles, sans soudure.

Les batteries actuelles, notamment les batteries destinées à stocker l'énergie électrique nécessaire à l'entraînement d'outils motorisés, sont constituées d'un grand nombre d'éléments (parfois de l'ordre de la centaine), reliés électriquement entre eux par des contacts formés par des lamelles conductrices soudées aux bornes desdits éléments, lesquels sont séparés par isolants et assemblés sous forme de pack par un ruban adhésif. La réalisation de telles batteries nécessite un montage fastidieux, long et onéreux. En outre, elles ne permettent pas le remplacement d'un ou plusieurs éléments qui pourraient s'avérer défectueux, par les services après-vente ou de maintenance.

Dans une application de fabrication de batteries constituées d'un petit nombre d'éléments et destinées à fournir l'énergie électrique nécessaire au fonctionnement de petits appareils portables tels que caméras, appareils de photographies, platines laser, on a proposé (US- 5 096 788) une batterie sans soudure comprenant :
- un logement ayant un couvercle ;
- une pluralité de cellules positionnées dans une paire de plaques d'alignement supérieure et inférieure et logées dans ledit logement, chaque cellule ayant une borne positive et une borne négative ;
- un circuit souple constitué par une unique feuille conductrice procurant l'interconnexion entre la pluralité de cellules ;
- un premier élément de pression disposé entre la surface interne du fond du logement et une portion de ladite feuille conductrice souple ; - et un deuxième élément de pression placé entre le couvercle et une autre portion de la feuille conductrice souple, chacun desdits premier et deuxième éléments de pression étant muni de doigts élastiques, lesdits doigts élastiques étant inclinés en direction des bornes positives et négatives, de sorte à plaquer lesdites portions opposées de la feuille conductrice contre lesdites bornes et à réaliser l'interconnexion de ladite pluralité de cellules.

L'application d'un tel dispositif à des batteries constituées d'un nombre important de cellules ne semble pas envisageable. En effet, dans une telle application, un dispositif de ce genre présenterait au moins les inconvénients rédhibitoires ci-après :
- les batteries constituées d'un grand nombre de cellules (par exemple de l'ordre de cent cellules) assemblées suivant un montage en parallèle, génèrent de très hauts courants électriques à transporter par les circuits d'interconnexion (jusqu'à 100 ampères), ce qui n'est pas réalisable avec des circuits souples ;
- la matière dans laquelle sont réalisées les circuits souples (film polyamide ou polyester) est très fragile et peut être détériorée par le frottement des ressorts d'appui en cas de légers mouvements, ce qui entraînerait une perte de contact électrique ;
- les ressorts tels que décrit sommairement dans le document US-5 096 788 (ressorts supposés découpés dans une tôle), n'ont pas une course et une force d'appui suffisantes pour assurer un contact efficace de la bande de contact souple sur les bornes des cellules ; en effet, les tolérances de fabrication nécessitent une course de l'ordre de 2 mm et l'effort de contact doit être de l'ordre de 2 kg pour que l'appui soit fiable, ce qui ne peut être obtenu avec le dispositif décrit dans le document susmentionné ;
- le coût du circuit souple est directement lié à la surface de celui-ci ; on conçoit qu'il serait très élevé si la technologie proposée dans ce document était appliquée à la réalisation de batteries constituées d'un grand nombre de cellules à connecter (très grande surface à couvrir) ;
- selon ce document, la batterie n'est plus démontable après la fermeture du couvercle par un procédé de scellement.

Dans une application à la fabrication de batteries constituées d'un nombre réduit de cellules, il a été proposé (DE-515 051) de loger ces cellules dans un casier fermé par un couvercle. Selon ce document, une pluralité de petites languettes flexibles sont fixées en sous-face du couvercle, de sorte à connecter chaque cellule avec une cellule adjacente après rabattement dudit couvercle. Une telle construction implique un montage très précis et long des languettes de contact, de sorte qu'elle n'est guère envisageable pour la réalisation de batteries comportant un grand nombre de cellules. En outre, les languettes se trouvent plaquées contre les bornes des cellules uniquement sous l'effet de leur propre élasticité, une telle pression étant cependant insuffisante pour garantir la pérennité d'un bon contact, ce qui peut contribuer à la réduction de la durée de vie des batteries utilisées de manière mouvementée à des fins professionnelles.

Enfin, dans une application à la fabrication de batteries constituées d'un grand nombre de cellules, il est connu (EP-1.450.422) de loger ces cellules dans un casier ouvert sur ses deux faces et de les relier, deux à deux, au moyen de petites plaques de connexion soudées sur les extrémités opposées desdites cellules.

Ce mode de connexion a pour inconvénient de nécessiter des éléments ou cellules adaptés à la soudure et un outillage spécialisé onéreux, encombrant et de manipulation délicate, pour réaliser les multiples soudures. Un autre inconvénient majeur de ce mode de connexion est de rendre la batterie indémontable, par exemple pour procéder au remplacement d'un ou plusieurs éléments défectueux.

De plus, les petites plaques de connexion utilisées dans le dispositif décrit par le document EP-1 450 422 ne sont pas pressées contre les pôles des éléments de la batterie par des moyens de pression individuels mais par un moyen collectif de pression constitué par des plaques de matière élastique, telles que des plaques de caoutchouc intercalées entre les bornes des cellules connectées et des plaques de couvertures supérieure et inférieure. De telles plaques élastiques ne permettent pas de garantir la continuité du contact électrique entre les petites plaquettes de connexion et les éléments ou cellules, notamment en cas de rupture des soudures.

L'invention vise à réaliser des batteries constituées d'une pluralité d'éléments ou cellules juxtaposés et reliés entre eux, sans soudure ou colle, de manière simple, plus rapide, plus économique, démontable et présentant une grande fiabilité.

Selon l'invention, ce but est atteint au moyen d'une batterie selon la revendication 1.

On comprend que l'assemblage mécanique des trois éléments structurels de la batterie au moyen de vis permet une simplification du montage de cette dernière, un gain de temps important dans le montage ce qui influe favorablement sur son coût. En outre, cet assemblage est très robuste, d'où une meilleure fiabilité de la batterie dans le temps par rapport aux montages nécessitant des soudures, ou l'utilisation de colle, d'isolants ou de rubans adhésifs.

Ce mode d'assemblage autorise, en outre, le remplacement facile d'un ou plusieurs éléments ou cellules qui seraient défectueux, par les services après-vente ou par les services de maintenance.

D'autre part, on obtient un contact très fiable, en particulier pour les forts courants, entre la bande de contact souple ou chacune des bandes de contact souples avec les bornes ou pôles des éléments ou cellules de la batterie. Le fait que chaque bande de contact flexible se trouve fermement plaquée contre l'une des bornes ou pôles des cellules ou éléments est particulièrement intéressant pour les forts courants en ce qu'il permet d'éviter les pertes électriques et par conséquent; l'échauffement au niveau de contact.

Selon un mode d'exécution avantageux, les languettes de contact flexible sont maintenues plaquées, individuellement, contre les bornes des cellules au moyen de ressorts orientés en direction desdites bornes et ancrés dans l'élément d'ossature des panneaux de contact et de maintien.

Selon une autre disposition caractéristique, les surfaces de contact des bandes de contact avec les bornes ou pôles + et - des éléments ou cellules, sont revêtues d'une graisse de contact conductrice, connue en soi, la présence de cette graisse favorisant la conduction et évitant la corrosion aux points de contact, sur une longue période d'utilisation.

Selon une autre disposition caractéristique, la face interne de chaque panneau de contact et de maintien est munie de plusieurs bandes de contact souples séparées les unes des autres et disposées parallèlement.

Le fait d'utiliser une pluralité de bandes de contact flexibles rend la solution selon la présente invention sensiblement plus fiable et économique par rapport à l'utilisation d'un seul circuit de connexion souple proposée par le document US- 5 096 788.

De manière avantageuse, chaque bande de contact souple comporte deux ou plus de deux alignements parallèles de languettes flexibles.

Selon un mode de réalisation applicable aux batteries comportant une pluralité d'alignements ou lignes de cellules ou éléments séparés par une distance ou pas, les bandes de contact souples de l'un des panneaux de contact et de maintien sont décalées d'un pas par rapport aux bandes de contact souples de l'autre panneau de contact et de maintien.

Selon l'invention, il est aussi possible d'orienter les pôles + et - des cellules ou éléments logés dans les alvéoles du casier séparateur-positionneur et de positionner les bandes de contact souples, de sorte à permettre une interconnexion desdits éléments ou cellules :
- suivant un montage en parallèle ; ou
- suivant un montage en série ; ou
- à la fois suivant un montage en série et un montage en parallèle.

Dans le cas de batteries constituées d'éléments Lithium ion montés en série/parallèle nécessitant un contrôle et un équilibrage de la tension, on peut mesurer et équilibrer la tension par ligne d'éléments en parallèle. Dans ce cas, le contrôle et l'équilibrage peuvent être réalisés par une carte électronique positionnée à l'intérieur du boîtier de la batterie et connectée auxdites bandes de contact flexibles.

Selon une autre disposition caractéristique, la bande de contact souple ou chaque bande de contact souple est fixée sur la face interne de l'élément d'ossature des panneaux de contact et de maintien, par embrochement sur des ergots dont est munie ladite face.

Cette disposition permet un positionnement précis, simple et rapide des bandes de contact souples sur les panneaux de contact et de maintien. D'autre part, elle assure le maintien en place des bandes de contact souples, lors du démontage d'un panneau de contact et de maintien, par exemple pour procéder au remplacement d'un ou plusieurs éléments défectueux, par les services d'après-vente ou de maintenance.

Selon une autre disposition caractéristique, un ou plusieurs passages est ou sont ménagé(s) entre la surface latérale des éléments et la surface interne des alvéoles traversants, dans lesquels sont logés lesdits éléments, de sorte à permettre une circulation d'air de refroidissement le long de ces derniers.

Selon un mode d'exécution préféré, les alvéoles ou cases du casier séparateur et positionneur dans lesquels sont logés, sans jeu notable, les éléments ou cellules cylindriques de la batterie, présentent une section polygonale, de préférence globalement carrée.

Grâce à cette disposition, on obtient une circulation d'air de refroidissement le long et autour des éléments ou cellules cylindriques ou prismatiques de la batterie, tout en maintenant ces derniers positionnés sans jeu significatif. Ce résultat est important, en raison du fait que lors de la charge et de la décharge des éléments ou cellules de la batterie, particulièrement lorsque cette dernière est composée d'accumulateurs à base de lithium (lithium ion ou autre), il se produit une élévation de température dans lesdits accumulateurs, température qu'il est grandement souhaitable d'équilibrer entre les éléments ou cellules, à l'intérieur de la batterie, et de refroidir.

Dans le même but, l'élément d'ossature d'au moins l'un des panneaux de contact et de maintien fixés sur chacune des grandes faces du casier séparateur et positionneur, est ajouré, de préférence sur toute sa superficie ou étendue. Avantageusement, il s'agit du panneau supérieur ou couvercle du pack batterie.

Selon une autre disposition caractéristique, une partie des vis du système de visserie assurant la fixation des panneaux de contact et de maintien sur le casier séparateur et positionneur traverse les espaces ménagés entre les bandes de contact flexibles.

Grâce à cette disposition, les panneaux de contact et de maintien se trouvent solidement fixés sur les grandes faces du casier séparateur positionneur.

Selon une autre disposition caractéristique, les vis traversant les espaces ménagés entre les bandes de contact souples sont réparties de sorte que leur axe de vissage se trouve au centre des axes d'un groupe de quatre éléments ou cellules de la batterie, ce qui permet de comprimer les ressorts et d'assurer un appui constant, ferme et stable, des quatre languettes de contact environnantes sur les bornes desdits quatre éléments ou cellules orientées face auxdites languettes.

La batterie selon l'invention est avantageusement utilisable dans toutes applications nécessitant une alimentation en courant électrique de hautes tensions demandant l'association de nombreuses cellules de base, telles que, par exemple, véhicules électriques, outils électroportatifs de nouvelle génération, etc.

Les buts, caractéristiques et avantages ci-dessus, et d'autres encore, ressortiront mieux de la description qui suit et des dessins annexés dans lesquels :

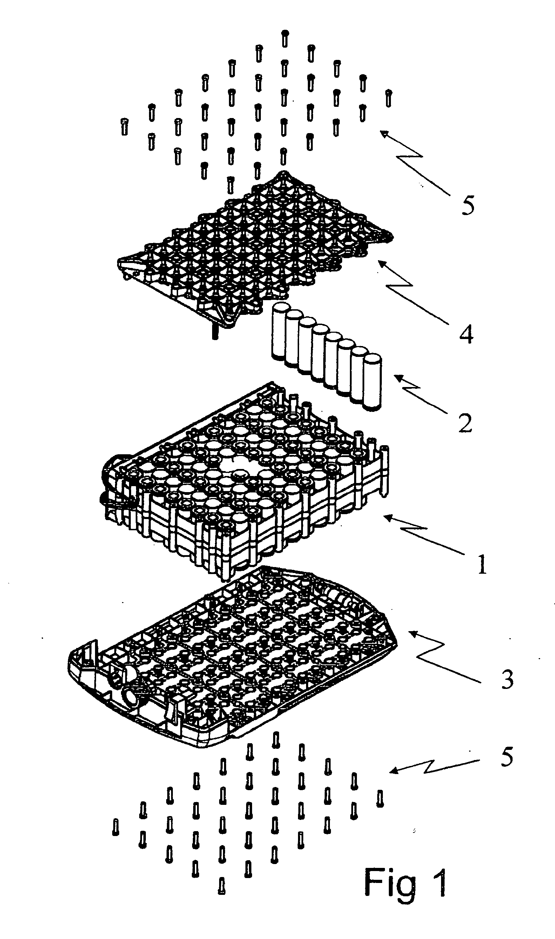

La figure 1 est une vue en perspective éclatée des trois parties constitutives d'un pack batterie selon l'invention.

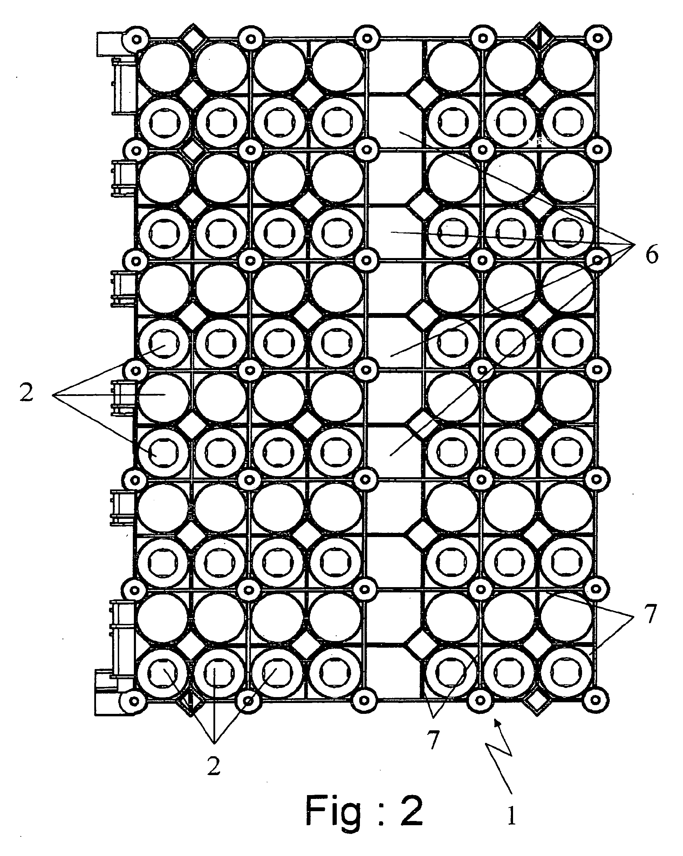

La figure 2 est une vue en plan du casier séparateur positionneur dans les alvéoles ou cases duquel sont logés les éléments ou cellules de la batterie dont certaines ont été retirées pour faciliter la description et la compréhension de l'invention.
La figure 3 est une vue en plan de la face interne du panneau supérieur ou couvercle du pack batterie, l'une des bandes de contact ayant été retirée également pour faciliter la compréhension de la description de l'invention.
La figure 4 est une vue en plan de la face interne du panneau inférieur ou fond du pack batterie, l'une des bandes de contact ayant été décrochée pour faciliter la compréhension de la description qui suit.

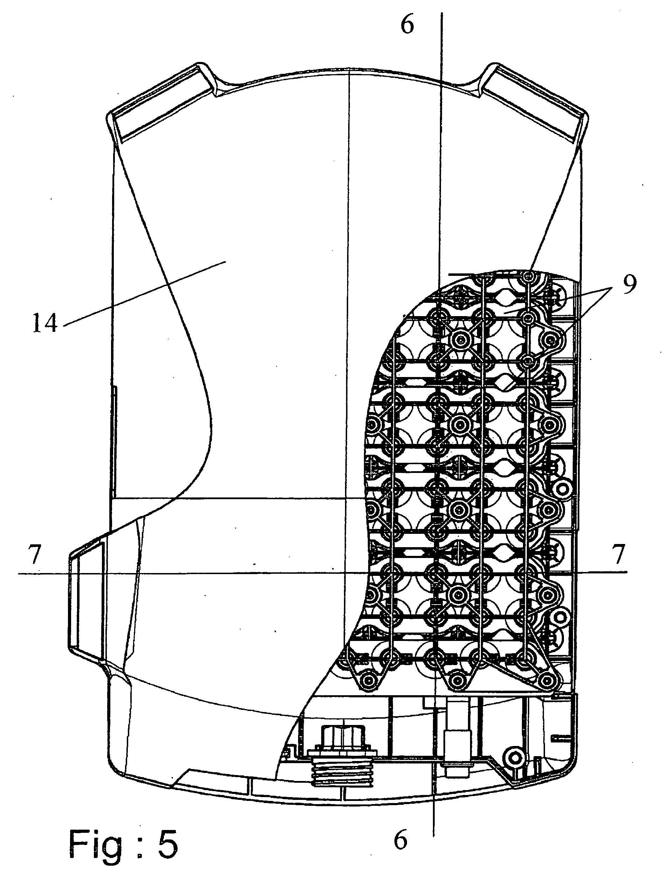

La figure 5 est une vue de dessus, avec arrachement partiel, du pack batterie.
La figure 6 est une vue en coupe longitudinale selon la ligne 6-6 de la figure 5.

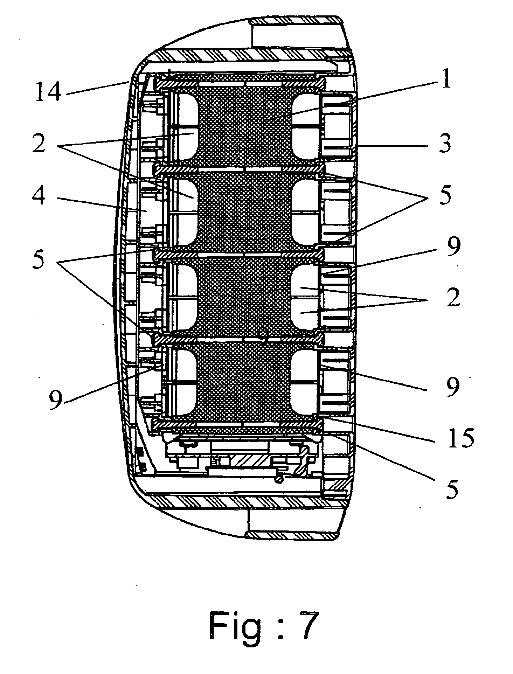

La figure 7 est une vue en coupe transversale suivant la ligne 7-7 de la figure 5.
La figure 8 est une vue de détail, en plan et à plus grande échelle, montrant les passages de circulation d'air le long des cellules de la batterie.
La figure 9 est une vue en coupe selon la ligne 9-9 de la figure 8.
La figure 10 est une vue partielle de la face interne d'un panneau de contact et de maintien, avec arrachement, montrant la fixation par embrochement des bandes de contact souples sur ladite face interne.
La figure 11 est une vue en coupe selon la ligne 11-11 de la figure 10.
La figure 12 est une vue de détail, en coupe et à plus grande échelle, montrant un mode d'ancrage des ressorts permettant de plaquer les languettes de contact contre les pôles + ou - des cellules.
La figure 13 est une vue de détail, de face et à plus grande échelle, montrant la répartition des ressorts de pression à l'intérieur de l'espace délimité par le périmètre du pack batterie.
La figure 14 est une vue en perspective éclatée illustrant un exemple de positionnement des bandes d'interconnexion par rapport aux pôles opposés d'un ensemble de cellules.
La figure 15 est une vue en perspective, avec arrachement partiel, illustrant une batterie selon l'invention, munie de son enveloppe ou capot de protection.
La figure 16 est une vue en perspective, avec arrachement partiel, montrant une batterie portative selon l'invention logée dans un sac, de genre sac à dos.
La figure 17 est une vue analogue à la figure 16, illustrant un mode de réalisation de la batterie portative, suivant lequel l'une des parties extérieures du boîtier contenant le pack-batterie fait partie intégrante du dispositif de portage.

On se reporte auxdits dessins pour décrire un exemple de réalisation avantageux, bien que nullement limitatif, de la batterie sans soudure selon l'invention.

Dans la description qui suit et dans les revendications :
- le terme "cellule" désigne un accumulateur rechargeable de base, de forme préférentiellement cylindrique, lequel est le plus souvent appelé "élément" dans le langage technique français.
- le mot « pluralité » désigne un nombre supérieur à deux et, dans le contexte de la présente invention, il doit être compris comme l'équivalent du terme « nombreuses » ou de l'expression « grand nombre ».
- les mots "fond" et "couvercle" sont purement conventionnels et ont simplement pour but de distinguer les panneaux de contact et de maintien lorsque cela est nécessaire.
- l'expression pack batterie désigne l'ensemble constitué par les trois parties principales de la batterie.

La batterie, selon l'invention, dans sa fonction de stockage d'énergie électrique, est essentiellement constituée de trois parties, soit :
- un séparateur-positionneur 1 dans lequel sont logées individuellement les cellules 2 de stockage d'énergie électrique ;
- deux panneaux de contact et de maintien 3 et 4 fixés au moyen de vis 5 sur les grandes faces opposées dudit séparateur-positionneur 1.

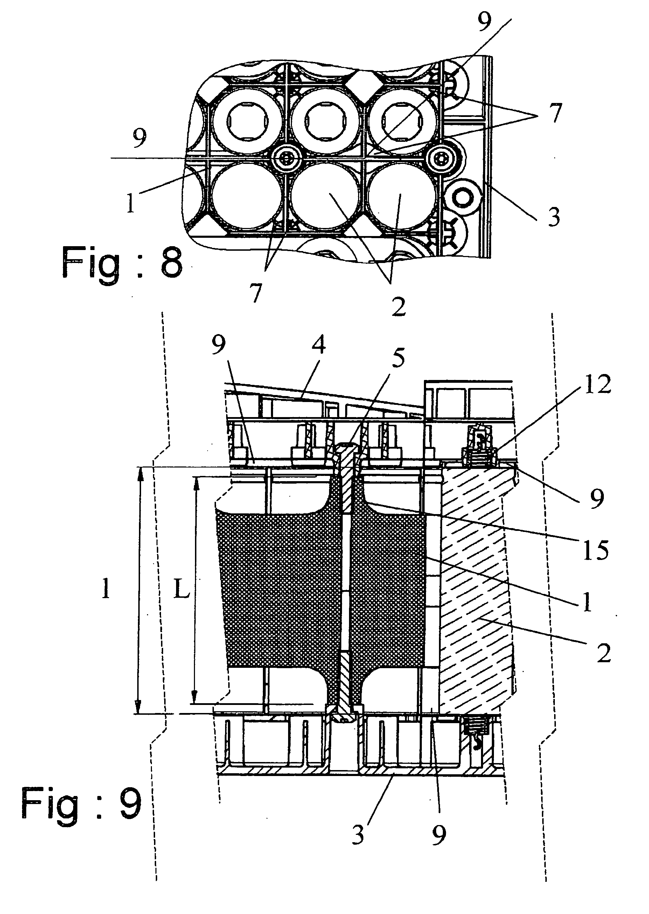

Le séparateur-positionneur 1 est principalement constitué par un casier, par exemple de forme générale rectangulaire, ce casier comportant une pluralité de cases ou alvéoles traversants 6 de section avantageusement polygonale, de préférence globalement carrée. Ces alvéoles 6 sont dimensionnés de sorte à enserrer les cellules 2, de préférence cylindriques, logées sans jeu notable dans lesdits alvéoles. Grâce à cet agencement, des passages 7 se trouvent ménagés le long des cellules 2 positionnées dans le casier 1, de façon à permettre une circulation d'air de refroidissement le long et autour desdites cellules (figures 8 et 9).

Les alvéoles 6 sont disposés sur plusieurs lignes ou alignements parallèles. Leur nombre peut varier en fonction de la destination des batteries. Par exemple, le casier 1 peut être pourvu de plus ou moins 96 alvéoles 6, répartis en douze alignements de huit alvéoles chacun.

Les alvéoles 6 présentent, de préférence et, avantageusement, une longueur L inférieure à la longueur I des cellules 2, de sorte que lorsque ces dernières sont positionnées dans le casier 1, leurs extrémités opposées constituées par leurs bornes positives et négatives émergent des extrémités ouvertes desdits alvéoles (figure 9).

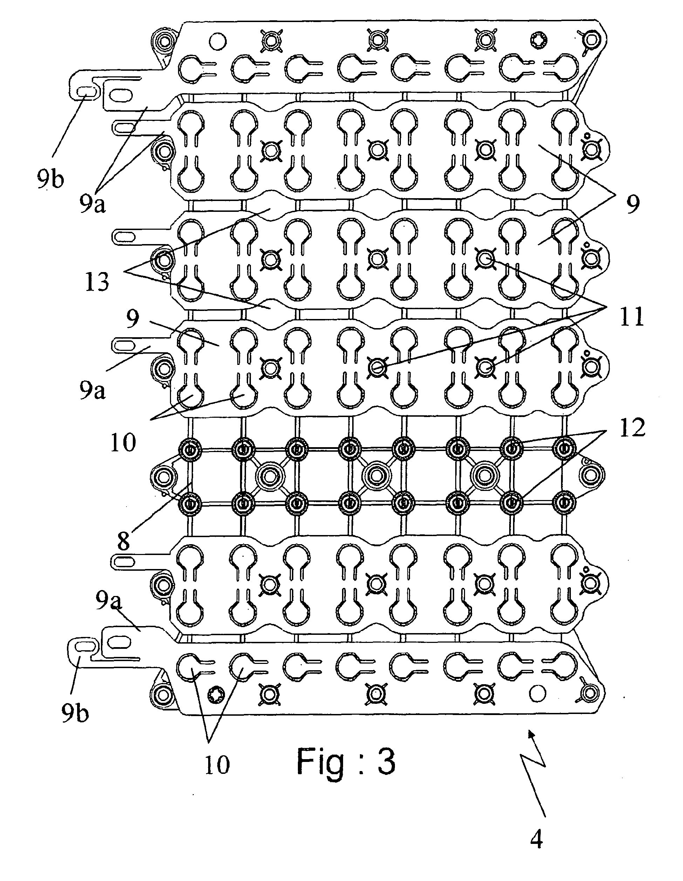

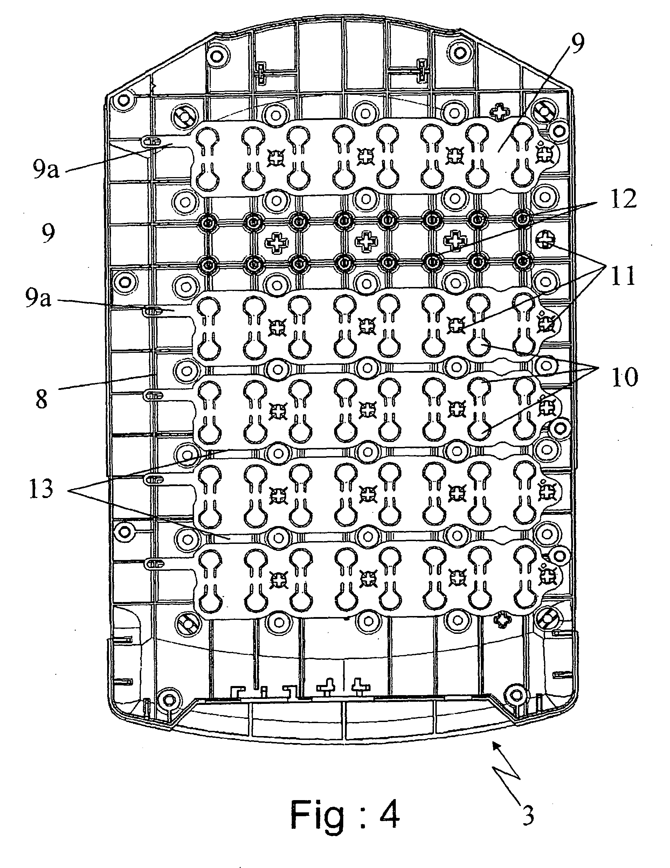

Les panneaux de contact et de maintien 3 et 4 comportent une ossature 8 sur la face interne de laquelle est positionnée et fixée au moins une bande de contact 9 et, de préférence, plusieurs bandes de contact 9 (figures 3 et 4) assurant l'interconnexion électrique des éléments 2 de la batterie, lorsque lesdits panneaux 3 et 4 sont assemblés au séparateur-positionneur central 1. Les bandes de contact 9 sont préférentiellement réalisées dans un matériau flexible, et peuvent être constituées par des feuilles minces de tout métal conducteur de l'électricité et inoxydable, par exemple par de minces bandes de cuivre revêtu de nickel.

Dans le cas d'utilisation de cellules lithium ion, l'une des extrémités des bandes de contact 9 est munie d'une cosse 9a de connexion au système de mesure de tension de la batterie et au système d'équilibrage des cellules, lors de la charge.

Les deux bandes de contact 9 placées aux extrémités de la rangée de bandes de contact souples sont également munies d'une deuxième cosse 9b connectée aux bornes + et -, respectivement, de la batterie, ces cosses étant destinées à être reliées à un appareil ou machine d'utilisation, et/ou à un chargeur de batterie.

L'élément d'ossature 8 d'au moins l'un des panneaux de contact et de maintien 3, 4 est ajouré, de préférence sur toute sa superficie ou étendue, pour permettre une circulation d'air de refroidissement au travers dudit ou desdits panneau(x).

Le casier 1 et l'élément d'ossature 8 des panneaux 3 et 4 peuvent être réalisés en toute matière plastique rigide isolante appropriée, par exemple en polyamide 6.

Selon une autre disposition caractéristique intéressante de l'invention, la bande de contact 9, ou chaque bande de contact 9, comporte une pluralité de languettes flexibles 10 lesquelles sont, de préférence, découpées dans le ou lesdites bande(s) de contact souples. Ces languettes flexibles 10 sont maintenues plaquées, individuellement, contre les bornes ou pôles + et - des cellules 2, par des moyens de pression distincts dont est, par exemple, munie la face interne de l'élément d'ossature des panneaux et dont un mode d'exécution intéressant est décrit ci-après. Les languettes de contact 10 pourraient aussi être réalisées dans un matériau élastique, de sorte à constituer d'elles mêmes le moyen de pression ou ressort les maintenant plaquées contre les pôles des cellules 2.

De préférence, la face interne de chaque panneau de contact et de maintien 3 et 4 est munie de plusieurs bandes souples 9, séparées les unes des autres et disposées parallèlement. Chaque bande de contact 9 comporte au moins deux alignements parallèles de languettes flexibles 10.

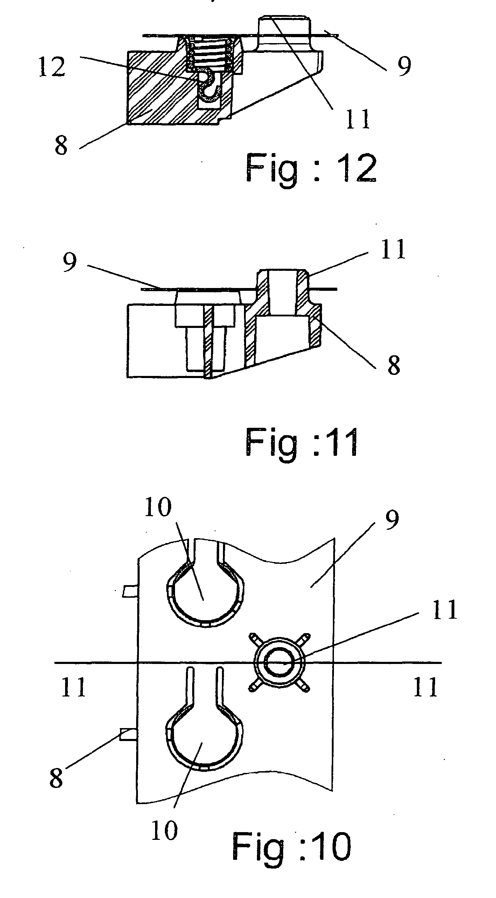

Avantageusement, la bande de contact flexible ou chaque bande de contact flexible 9 est fixée contre la face interne de l'élément d'ossature 8 des panneaux de contact et de maintien 3 et 4, par embrochement sur des ergots 11 dont est munie ladite face (figures 10 - 12).

Selon une autre disposition avantageuse de l'invention, les pôles + et - des cellules 2 positionnées dans le casier 1 et les bandes de contact 9 sont organisés de sorte à réaliser:
- soit le montage en parallèle desdites cellules ;
- soit leur montage en série ;
- soit leur montage en série et en parallèle.

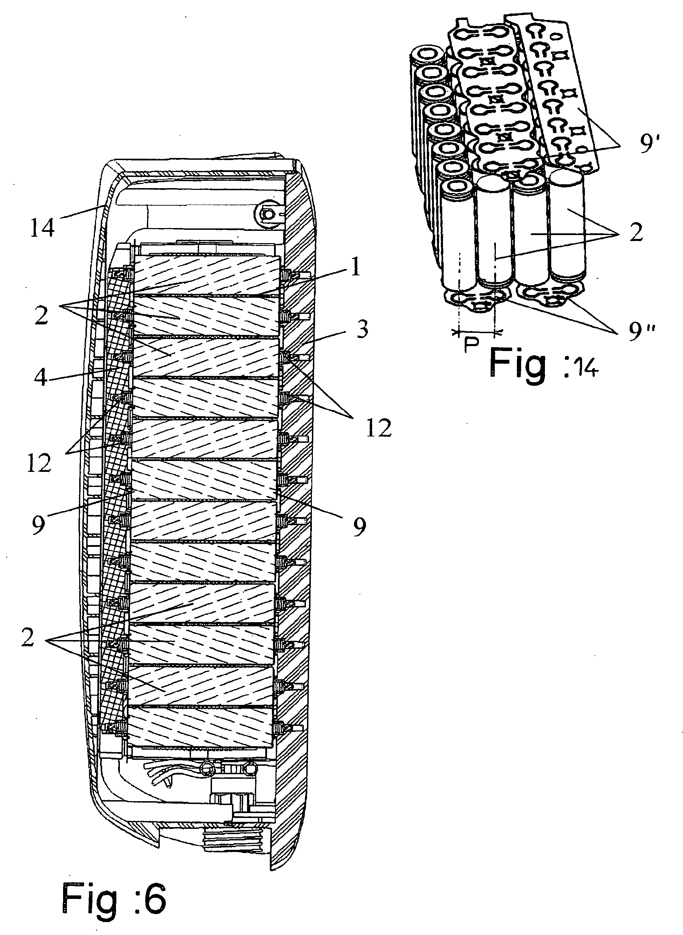

Les cellules 2 positionnées dans le casier 1 forment plusieurs alignements ou lignes d'éléments parallèles dont les axes sont séparés par une distance ou pas p, et selon une disposition caractéristique de l'invention, les bandes de contact souples 9' de l'un des panneaux de contact et de maintien sont décalées d'un pas p par rapport aux bandes de contact 9" de l'autre panneau de contact (figure 14).

Selon un mode d'exécution très efficace, la face interne de l'élément d'ossature 8 des panneaux 3 et 4 est munie d'une pluralité de ressorts orientés en direction des bornes + ou - des cellules 2 et prenant appui contre les languettes flexibles 10 des bandes de contact 9 en permettant ainsi de plaquer, individuellement, lesdites languettes flexibles 10 contre lesdites bornes.

Ces ressorts sont, de préférence, constitués par des ressorts hélicoïdaux 12 ancrés de manière indémontable, par l'intermédiaire de l'une de leurs extrémités, dans l'élément d'ossature 8 des panneaux 3 et 4 (figure 12).

Comme indiqué précédemment, les panneaux de contact et de maintien 3 et 4 sont assemblés, au moyen de vis 5, au séparateur-positionneur central 1. Une partie des vis de la visserie assurant cet assemblage, traverse les espaces 13 ménagés entre les bandes de contact 9. Les vis 5 se vissent dans des colonnettes 15 que présente le casier 1 à sa périphérie et à l'intérieur de l'espace délimité par celle-ci. Les colonnettes 15 ont une hauteur légèrement supérieure à celle du casier, de sorte à se trouver en saillies sur chaque face du casier 1.

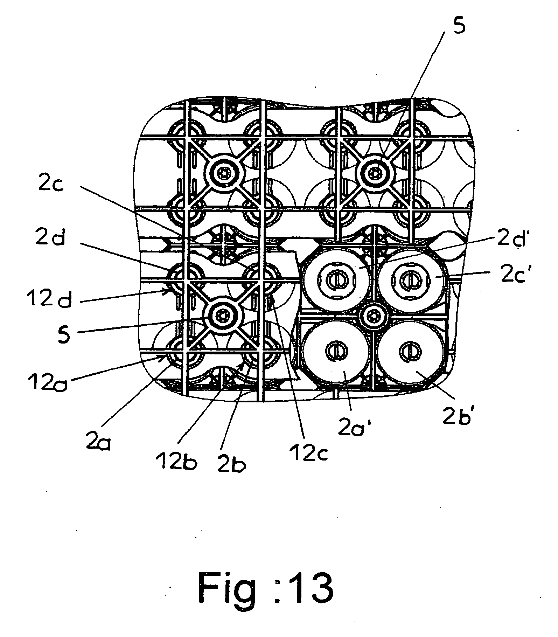

De manière avantageuse, les vis 5 traversant les espaces 13 ménagés entre les bandes de contacts 9 sont réparties de sorte que leur axe de vissage se trouve situé au centre des axes d'un groupe de quatre ressorts 12a, 12b, 12c, 12d, et de quatre cellules 2a, 2b, 2c, 2d ou 2a', 2b', 2c', 2d' positionnées dans le casier 1 (figure 13). Cette multiplicité des points d'assemblage et leur répartition étudiée permettent d'assurer un assemblage solide des trois parties du pack batterie, ainsi qu'un appui constant et stable de l'ensemble des languettes flexibles de contact 10 sur les pôles ou bornes + et - de l'ensemble des cellules 2.

Ce contact direct et stable des languettes 10 des bandes d'interconnexion 9 et des pôles + et - des cellules 2 permet une mesure très précise de la tension desdites cellules, en raison du fait que ce contact permet d'avoir une résistance très faible qui ne fausse pas les mesures lesquelles sont nécessaires, surtout dans le cas des batteries lithium ion.

Avantageusement, les surfaces de contact des languettes flexibles 10 des bandes d'interconnexion 9 avec les pôles + et - des cellules 2 sont revêtues d'une graisse de contact conductrice, connue en soi.

Les panneaux de contact et de maintien 3 et 4 peuvent être sensiblement identiques et constituer, avec le séparateur positionneur 1 et les cellules 2, un pack batterie qui peut être logé dans un boîtier ou enveloppe 14. Alternativement, les panneaux de contact et de maintien 3 et 4 peuvent être agencés de sorte à constituer directement le boîtier de la batterie, le panneau 3 constituant, par exemple, le fond de ce boîtier dont le couvercle est, dans ce cas, formé par le panneau 4. Selon un autre mode d'exécution, le panneau inférieur constitue le fond d'un boîtier dont la partie restante est formée par un capot se fixant, de manière amovible, sur ledit fond.

On ne décrit pas les moyens de raccordement des bandes de contact aux bornes de connexion permettant le branchement de la batterie aux appareils d'utilisation ou aux chargeurs, ni le circuit électronique assurant le bon fonctionnement et la sécurité de la batterie, ces moyens et circuit étant bien connus de l'homme de l'art.

Une autre caractéristique de la batterie 16 réalisée de la manière décrite ci-dessus est qu'elle est portative.

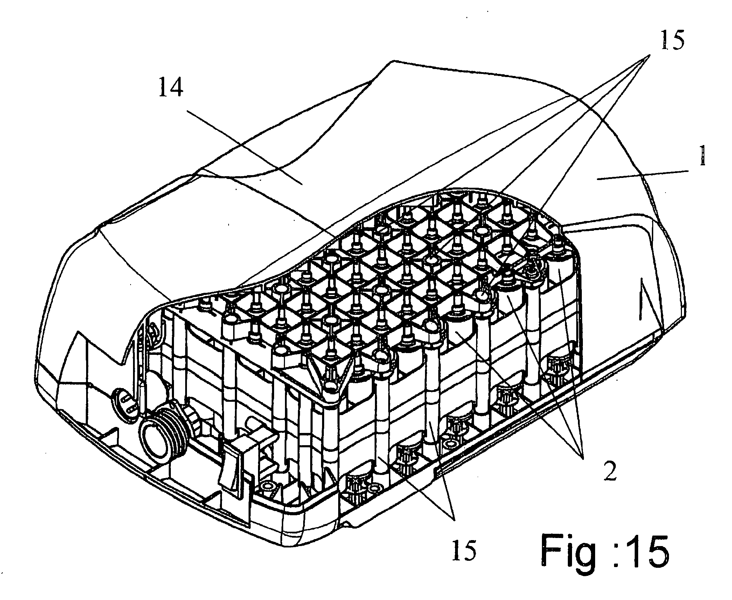

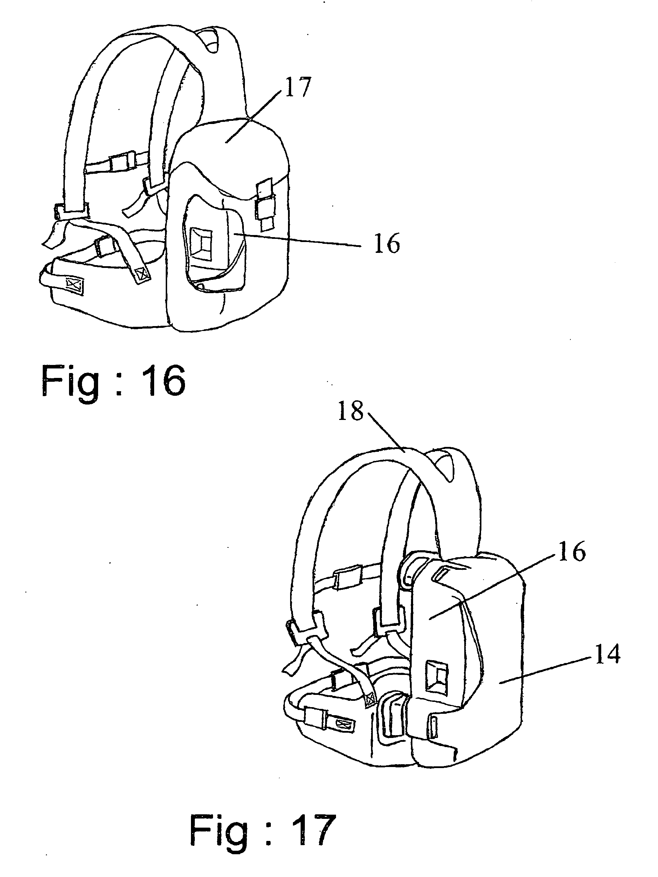

Elle peut être placée dans un sac de type sac à dos 17 (figure 15), ou l'une des parties extérieures du boîtier 14 de la batterie 16 ou du pack batterie peut être munie de sangles ou bretelles 18 permettant le portage (figure 16).

## Revendications

1. Batterie constituée d'une pluralité de cellules cylindriques ou prismatiques juxtaposées (2), reliées entre elles sans soudure et logées dans les alvéoles traversantes (6) d'un casier séparateur et positionneur (1), **caractérisée en ce que** ce casier séparateur et positionneur (1) est disposé entre deux panneaux de contact et de maintien (3, 4) comportant une ossature (8) et dont les faces internes sont munies d'une ou plusieurs bande(s) de contact (9) fixée(s), sans soudure, contre lesdites faces et assurant chacune l'interconnexion électrique d'une pluralité de cellules c'est-à-dire d'un nombre de cellules supérieur à deux, cette bande de contact (9) ou chacune des bandes de contact (9) étant réalisée dans un matériau conducteur flexible et comportant une pluralité de languettes de contact flexibles (10) découpées dans ladite ou dans chacune desdites bande(s) de contact (9) et rattachées à celle(s)-ci, ces languettes de contact (10) étant maintenues plaquées contre les bornes des cellules (2), par des moyens élastiques de pression individuels (12) répartis sur la face interne des panneaux de contact et de maintien (3, 4), lesdits panneaux étant fixés par vissage sur les grandes faces opposées du casier séparateur et positionneur (1), de sorte que lesdites languettes de contact (10) équipant la face interne desdits panneaux (3,4) se trouvent pressées individuellement contre l'une des bornes ou pôles positif ou négatif constituant les extrémités opposées desdites cellules.

2. Batterie selon la revendication 1, **caractérisée en ce que** les languettes de contact flexibles (10) sont maintenues plaquées, individuellement, contre les bornes des cellules (2) au moyen de ressorts (12) orientés en direction desdites bornes et ancrés dans l'élément d'ossature (8) des panneaux de contact et de maintien (3, 4).

3. Batterie suivant l'une des revendications 1 ou 2, **caractérisée en ce que** la face interne de chaque panneau de contact et de maintien (3, 4) est munie de plusieurs bandes de contact (9), séparées les unes des autres et disposées parallèlement.

4. Batterie selon la revendication 3, **caractérisée en ce que** chaque bande de contact (9) comporte des alignements parallèles de languettes de contact flexibles (10).

5. Batterie selon l'une des revendications 3 ou 4, **caractérisée en ce que** ses cellules (2) sont positionnées et les bandes de contact (9) sont organisées, pour réaliser le montage en parallèle desdites cellules.

6. Batterie suivant l'une des revendications 3 ou 4, **caractérisée en ce que** ses cellules (2) sont positionnées et les bandes de contact (9) sont organisées, pour réaliser le montage en série desdites cellules.

7. Batterie selon l'une des revendications 3 ou 4, **caractérisée en ce que** ses cellules (2) sont positionnées et les bandes de contact (9) sont organisées, pour réaliser le montage en série et en parallèle desdites cellules.

8. Batterie suivant la revendication 4 comportant plusieurs alignements ou lignes de cellules (2) séparées par une distance ou pas (p), **caractérisée en ce que** les bandes de contact (9') de l'un des panneaux de contact et de maintien sont décalées de ce pas (p) par rapport aux bandes de contact (9") de l'autre panneau de contact et de maintien.

9. Batterie suivant l'une quelconque des revendications 1 à 8, **caractérisée en ce que** la bande de contact (9) ou chaque bande de contact (9) est fixée sur la face interne de l'élément d'ossature (8) des panneaux de contact et de maintien (3, 4), par embrochement sur des ergots (11) dont est munie ladite face.

10. Batterie selon l'une quelconque des revendications 1 à 9, **caractérisée en ce qu'**un ou plusieurs passages (7) est ou sont ménagé(s) entre la surface latérale des cellules (2) et la surface interne des alvéoles traversantes (6) dans lesquelles sont logés lesdites cellules, de sorte à permettre une circulation d'air de refroidissement le long de ces derniers.

11. Batterie selon la revendication 10, comportant une de cellules cylindriques (2), **caractérisée en ce que** les alvéoles ou cases (6) du casier séparateur et positionneur (1) dans lesquelles sont logées lesdites cellules, présentent une section polygonale, de sorte à permettre une circulation d'air de refroidissement le long et autour desdites cellules, tout en maintenant ces dernières positionnées sans jeu significatif.

12. Batterie suivant l'une quelconque des revendications 1 à 11, **caractérisée en ce que** l'élément d'ossature (8) d'au moins l'un des panneaux de contact et de maintien (3, 4) est ajouré, pour permettre une circulation d'air de refroidissement au travers dudit ou desdits panneau(x).

13. Batterie selon l'une quelconque des revendications 3 à 12, **caractérisée en ce qu'**une partie des vis (5) du système de visserie assurant la fixation des panneaux de contact et de maintien (3, 4) sur le casier séparateur et positionneur (1) traverse des espaces (13) ménagés entre les bandes de contact (9).

14. Batterie selon la revendication 13, **caractérisée en ce que** les vis (5) traversant les espaces ménagés entre les bandes de contact (9) sont réparties de sorte que leur axe de vissage se trouve au centre des axes d'un groupe de quatre cellules (2a, 2b, 2c, 2d ; 2a', 2b', 2c', 2d'), de sorte à assurer un appui constant, ferme et stable des quatre languettes de contact environnantes sur les pôles desdites quatre cellules.

15. Batterie suivant l'une des revendications 13 ou 14, **caractérisée en ce que** les vis (5) se vissent dans des colonnettes saillantes (15) que présente le casier séparateur et positionneur, sur chacune de ses faces, à sa périphérie et dans l'espace intérieur délimité par celle-ci.

16. Batterie selon l'une quelconque des revendications 1 à 9, **caractérisée en ce que** les surfaces de contact (10) des bandes de contact (9) avec les pôles + et - des cellules (2), sont revêtues d'une graisse de contact conductrice, connue en soi.

17. Batterie selon l'une quelconque des revendications 1 à 16, **caractérisée en ce que** les alvéoles traversants (6) du casier séparateur et positionneur (1) présentent une longueur (L) inférieure à la longueur des cellules (2), de sorte que les bornes positives et négatives desdites cellules (2) émergent des extrémités ouvertes des alvéoles traversants (6) dudit casier.

18. Batterie selon l'une quelconque des revendications 1 à 17, **caractérisée en ce qu'**elle est portative, ladite batterie (16) étant, placée dans un sac du genre sac à dos (17) ou munie de sangles ou bretelles (18) rattachées à l'une des parties extérieures du boîtier (14) ou à l'une des parties extérieures (3, 4) du pack batterie.

## Claims

1. A battery formed by a plurality of juxtaposed cylindrical or prismatic cells (2) connected together without welding and housed in through holes (6) of a separating and positioning casing (1), **characterised in that** the separating and positioning casing (1) is disposed between two contact and holding panels (3, 4) comprising a framework (8) and the internal faces of which are provided with one or more contact strips (9) fixed without welding against said faces and each ensuring electrical interconnection of a plurality of cells, that is to say a number of cells greater than two, said contact strip (9) or each of the contact strips (9) being made of a flexible conducting material and comprising a plurality of flexible contact tongue portions (10) which are cut out in said or in each of said contact strips (9) and attached to same, said contact tongue portions (10) being held pressed against the terminals of the cells (2) by individual elastic pressure means (12) distributed over the internal face of the contact and holding panels (3, 4), said panels being fixed by screwing to the large opposite faces of the separating and positioning casing (1) in such a way that said contact tongue portions (10) equipping the internal face of said panels (3, 4) are pressed individually against one of the positive or negative poles or terminals constituting the opposite ends of said cells.

2. A battery according to claim 1 **characterised in that** the flexible contact tongue portions (10) are held pressed individually against the terminals of the cells (2) by means of springs (12) oriented in the direction of said terminals and anchored in the framework element (8) of the contact and holding panels (3, 4).

3. A battery according to one of claims 1 and 2 **characterised in that** the internal face of each contact and holding panel (3, 4) is provided with a plurality of contact strips (9) separated from each other and disposed in parallel relationship.

4. A battery according to claim 3 **characterised in that** each contact strip (9) comprises parallel alignments of flexible contact tongue portions (10).

5. A battery according to one of claims 3 and 4 **characterised in that** its cells (2) are positioned and the contact strips (9) are organised to provide for parallel mounting of said cells.

6. A battery according to one of claims 3 and 4 **characterised in that** its cells (2) are positioned and the contact strips (9) are organised to provide for series mounting of said cells.

7. A battery according to one of claims 3 and 4 **characterised in that** its cells (2) are positioned and the contact strips (9) are organised to provide for parallel and series mounting of said cells.

8. A battery according to claim 4 comprising a plurality of alignments or lines of cells (2) separated by a distance or pitch (p), **characterised in that** said contact strips (9') of one of the contact and holding panels are displaced by said pitch (p) with respect to the contact strips (9") of the other contact and holding panel.

9. A battery according to any one of claims 1 to 8 **characterised in that** the contact strip (9) or each contact strip (9) is fixed on the internal face of the framework element (8) of the contact and holding panels (3, 4) by plugging engagement on lugs (11) with which said face is equipped.

10. A battery according to any one of claims 1 to 9 **characterised in that** one or more passages (7) is or are provided between the lateral surface of the cells (2) and the internal surface of the through holes (6) in which said cells are accommodated, in such a way as to permit a flow of cooling air along the latter.

11. A battery according to claim 10 comprising one of the cylindrical cells (2), **characterised in that** the holes or cavities (6) of the separating and positioning casing (1) in which said cells are accommodated are of a polygonal section so as to permit a flow of cooling air along and around said cells while keeping the latter positioned without significant play.

12. A battery according to any one of claims 1 to 11 **characterised in that** the framework element (8) of at least one of the contact and holding panels (3, 4) is apertured to permit a flow of cooling air through said panel or panels.

13. A battery according to any one of claims 3 to 12 **characterised in that** a portion of the screws (5) of the screwing system providing for fixing of the contact and holding panels (3, 4) on the separating and positioning casing (1) passes through spaces (13) between the contact strips (9).

14. A battery according to claim 13 **characterised in that** the screws passing through the spaces between the contact strips (9) are so distributed that their screwing axis is at the center of the axes of a group of four cells (2a, 2b, 2c, 2d; 2a', 2b', 2c', 2d') so as to ensure constant, firm and stable support for the four surrounding contact tongue portions on the poles of said four cells.

15. A battery according to one of claims 13 and 14 **characterised in that** the screws (5) are screwed into protruding column portions (15) on the separating and positioning casing on each of its faces, at its periphery and in the internal space delimited by same.

16. A battery according to any one of claims 1 to 9 **characterised in that** the contact surfaces (10) of the contact strips (9) with the positive and negative poles of the cells (2) are coated with a per se known conductive contact grease.

17. A battery according to any one of claims 1 to 16 **characterised in that** the through holes (6) of the separating and positioning casing (1) are of a length (L) less than the length of the cells (2) so that the positive and negative terminals of said cells (2) protrude from the open ends of the through holes (6) in the casing.

18. A battery according to any one of claims 1 to 17 **characterised in that** it is portable, said battery (16) being placed in a bag of the rucksack type (17) or provided with straps or bands (18) attached to one of the external parts of the housing (1) or to one of the external parts (3, 4) of the battery pack.

## Patentansprüche

1. Batterie, die aus einer Vielzahl von nebeneinander angeordneten zylindrischen oder prismatischen Zellen (2) gebildet wird, die miteinander ohne Schweißung verbunden sind und in den durchgehenden Fächern (6) eines Trenn- und Positionierfachgestells (1) untergebracht sind, **dadurch gekennzeichnet, dass** dieses Trenn- und Posiltionierfachgestell (1) zwischen zwei Kontakt- und Halteplatten (3, 4) angeordnet ist, die eine Tragkonstruktion (8) aufweisen und deren Innenseiten mit einer oder mehreren Kontaktleisten (9) ausgestattet sind, die ohne Schweißung an den Seiten anliegend befestigt sind und jeweils die elektrische Verbindung einer Vielzahl von Zellen, d.h. einer höheren Anzahl von Zellen als zwei, gewährleisten, wobei diese Kontaktleiste (9) oder jede der Kontaktleisten (9) aus einem flexiblen leitenden Material ausgeführt ist und eine Vielzahl von flexiblen Kontaktzungen (10) umfasst, die in der oder jeder der Kontaktleisten (9) ausgeschnitten und an dieser bzw. diesen befestigt sind, wobei diese Kontaktzungen (10) mittels über die Innenseite der Kontakt- und Halteplatten (3, 4) verteilter elastischer einzelner Druckmittel (12) gegen die Anschlussklemmen der Zellen (2) gedrückt gehalten werden, wobei die Platten mittels Verschraubung an den großen gegenüberliegenden Seiten des Trenn- und Positionierfachgestells (1) so befestigt sind, dass die Kontaktzungen (10), mit denen die Innenseite der Platten (3, 4) bestückt sind, einzeln gegen eine der negativen oder positiven Anschlussklemmen oder Pole gedrückt werden, die die einander gegenüber liegenden Enden der Zellen bilden.

2. Batterie nach Anspruch 1, **dadurch gekennzeichnet, dass** die flexiblen Kontaktzungen (10) mittels Federn (12), die in Richtung der Anschlussklemmen ausgerichtet sind und in dem Tragkonstruktionselement (8) der Kontakt- und Halteplatten (3, 4) verankert sind, einzeln gegen die Anschlussklemmen der Zellen (2) gedrückt gehalten werden.

3. Batterie nach einem der Ansprüche 1 oder 2, **dadurch gekennzeichnet, dass** die Innenseite jeder Kontakt- und Halteplatte (3, 4) mit mehreren Kontaktleisten (9) ausgestattet ist, die voneinander getrennt und parallel angeordnet sind.

4. Batterie nach Anspruch 3, **dadurch gekennzeichnet, dass** jede Kontaktleiste (9) parallele Reihen von flexiblen Kontaktzungen (10) umfasst.

5. Batterie nach einem der Ansprüche 3 oder 4, **dadurch gekennzeichnet, dass** ihre Zellen (2) so positioniert und die Kontaktleisten (9) so organisiert sind, dass die parallele Montage der Zellen ausgeführt werden kann.

6. Batterie nach einem der Ansprüche 3 oder 4, **dadurch gekennzeichnet, dass** ihre Zellen (2) so positioniert und die Kontaktleisten (9) so organisiert sind, dass die serielle Montage der Zellen ausgeführt werden kann.

7. Batterie nach einem der Ansprüche 3 oder 4, **dadurch gekennzeichnet, dass** ihre Zellen (2) so positioniert und die Kontaktleisten (9) so organisiert sind, dass die serielle und parallele Montage der Zellen ausgeführt werden kann.

8. Batterie nach Anspruch 4, die mehrere Reihen oder Zellen von Zellen (2) umfasst, die durch einen Abstand oder eine Teilung (p) getrennt sind, **dadurch gekennzeichnet, dass** die Kontaktleisten (9')einer der Kontakt- und Halteplatten um diese Teilung (p) gegenüber den Kontaktleisten (9") der anderen Kontakt- und Halteplatte versetzt sind.

9. Batterie nach einem der Ansprüche 1 bis 8, **dadurch gekennzeichnet, dass** die Kontaktleiste (9) oder jede Kontaktleiste (9) an der Innenseite des Tragkonstruktionselements (8) der Kontakt- und Halteplatten (3, 4) mittels Einschub zwischen Nocken (11), mit denen die Seite ausgestattet ist, befestigt ist.

10. Batterie nach einem der Ansprüche 1 bis 9, **dadurch gekennzeichnet, dass** eine oder mehrere Durchführungen (7) zwischen der Seitenfläche der Zellen (2) und der Innenseite der durchgehenden Fächer (8) ausgespart ist oder sind, in denen die Zellen so untergebracht sind, dass eine Zirkulation von Kühlluft entlang diesen Letzteren möglich ist.

11. Batterie nach Anspruch 10, enthaltend eine der zylindrischen Zellen (2), **dadurch gekennzeichnet, dass** die Fächer oder Abteilungen (6) des Trenn- und Positionierfachgestells (1), In denen die Zellen untergebracht sind, einen polygonalen Querschnitt aufweisen, so dass eine Zirkulation von Kühlluft entlang und um diese Zellen möglich ist, wobei diese Letzteren ohne nennenswertes Spiel in Position gehalten werden.

12. Batterie nach einem der Ansprüche 1 bis 11, **dadurch gekennzeichnet, dass** das Tragkonstruktionselement (8) mindestens einer der Kontakt- und Halteplatten (3, 4) durchbrochen ist, um eine Zirkulation von Kühlluft durch die Platte bzw. Platten (x) zu gestatten.

13. Batterie nach einem der Ansprüche 3 bis 12, **dadurch gekennzeichnet, dass** ein Teil der Schrauben (5) des Verschraubungssystems, das die Befestigung der Kontakt- und Halteplatten (3, 4) an dem Trenn- und Positionierfachgestell (1) sicherstellt, zwischen den Kontaktleisten (9) ausgesparte Zwischenräume (13) durchquert.

14. Batterie nach Anspruch 13, **dadurch gekennzeichnet, dass** die Schrauben (5), die die zwischen den Kontaktleisten (9) ausgesparten Zwischenräume durchqueren, so verteilt sind, dass sich ihre Verschraubungsachse in der Mitte der Achsen einer Gruppe von vier Zellen (2a, 2b, 2c, 2d; 2a', 2b`, 2c`, 2d') befindet, so dass eine konstante, feste und stabile Auflage der vier umgebenden Kontaktzungen auf den Polen der vier Zellen sichergestellt ist.

15. Batterie nach einem der Ansprüche 13 oder 14, **dadurch gekennzeichnet, dass** die Schrauben (5) in eine der vorspringenden kleinen Säulen (15) eingeschraubt werden, die das Trenn- und Positionierfachgestell auf jeder seiner Seiten, an seinem Umfang und in dem durch ihn begrenzten Innenraum aufweist.

16. Batterie nach einem der Ansprüche 1 bis 9, **dadurch gekennzeichnet, dass** die Kontaktflächen (10) der Kontaktleisten (9) mit den "+"- und "-"-Polen der Zellen (2) mit einem bekannten leitenden Kontaktfett beschichtet sind.

17. Batterie nach einem der Ansprüche 1 bis 16, **dadurch gekennzeichnet, dass** die durchgehenden Fächer (6) des Trenn- und Positionterfachgestells (1) eine Länge (L) aufweisen, die kleiner als die Länge der Zellen (2) ist, so dass die positiven und negativen Anschlussklemmen der Zellen (2) aus den offenen Enden der durchgehenden Fächer (6) des Fachgestells hervorstehen.

18. Batterie nach einem der Ansprüche 1 bis 17, **dadurch gekennzeichnet, dass** sie tragbar ist, wobei die Batterie (16) in einer Tasche der Art eines Rucksacks (17) angeordnet oder mit Gurten oder Tragriemen (18) ausgestattet wird, die an einem der externen Teile des Gehäuses (14) oder an einem der externen Teile (3, 4) des Batteriepacks befestigt werden.
